(19) Europäisches Patentamt
European Patent Office
Office européen des brevets

(11) EP 0 394 419 B2

(12) NEUE EUROPÄISCHE PATENTSCHRIFT

(45) Veröffentlichungstag und Bekanntmachung des Hinweises auf die Entscheidung über den Einspruch:
**06.10.1999 Patentblatt 1999/40**

(45) Hinweis auf die Patenterteilung:
**21.09.1994 Patentblatt 1994/38**

(21) Anmeldenummer: **89912095.0**

(22) Anmeldetag: **17.10.1989**

(51) Int Cl.6: **C09K 19/42**, C09K 19/30, G02F 1/137

(86) Internationale Anmeldenummer:
**PCT/EP89/01226**

(87) Internationale Veröffentlichungsnummer:
**WO 90/04623 (03.05.1990 Gazette 1990/10)**

# (54) MATRIXANZEIGEANORDNUNG MIT FLÜSSIGKRISTALLEN

MATRIX LIQUID CRYSTAL DISPLAY

AFFICHAGE MATRICIEL A CRISTAUX LIQUIDES

(84) Benannte Vertragsstaaten:
**AT BE CH DE FR GB IT LI NL SE**

(30) Priorität: **20.10.1988 DE 3835730**
**15.03.1989 DE 3908403**
**13.07.1989 DE 3923044**

(43) Veröffentlichungstag der Anmeldung:
**31.10.1990 Patentblatt 1990/44**

(73) Patentinhaber: **MERCK PATENT GmbH**
**64271 Darmstadt (DE)**

(72) Erfinder:
- **WEBER, Georg**
  **D-6106 Erzhausen (DE)**
- **POHL, Ludwig**
  **D-6100 Darmstadt (DE)**
- **HITTICH, Reinhard**
  **D-6101 Modautal (DE)**
- **PLACH, Herbert**
  **D-6100 Darmstadt (DE)**
- **SCHEUBLE, Bernhard Bluff 100**
  **100-1, Yamate-cho**
  **Kanagawa 231 (JP)**
- **OYAMA, Takamasa Komachi Corp. 207**
  **Kanagawa (JP)**
- **RIEGER, Bernhard**
  **D-6115 Münster-Altheim (DE)**
- **KURMEIER, Hans-Adolf**
  **D-6104 Seeheim-Jugenheim (DE)**
- **BARTMANN, Ekkehard**
  **D-6106 Erzhausen (DE)**

(56) Entgegenhaltungen:
**EP-A- 0 258 868**
**EP-A- 0 261 614**
**EP-A- 0 332 005**
**WO-A-88/09360**
**WO-A-89/03867**
**WO-A-89/08692**
**DE-A- 3 221 462**
**JP-A- 63 003 086**

- **Physics Letters, vol. 57 A, no 5, 12.07.1976, S. 442-444, M. Schadt**
- **Reprint of the 14th Discussion of Liquid Crystals at Tohoku University, Japan, September 1988, Artikel Nr. 2D309 "Some Physical Properties of Unsaturated Nematic Compounds"**



Printed by Jouve, 75001 PARIS (FR)

## Beschreibung

Die Erfindung betrifft eine Matrix-Flüssigkristallanzeige nach Anspruch 1.

Matrix-Flüssigkristallanzeigen (MFK-Anzeigen) gemäß des Oberbegriffs sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:

1. MOS (Metal Oxide Semiconductor)-Transistoren auf Silizium-Wafer als Substrat.
2. Dünnfilm-Transistoren (TFT) auf einer Glasplatte als Substrat.

Bei Typ 1 wird als elektrooptischer Effekt üblicherweise die dynamische Streuung oder der Guest-Host-Effekt verwendet. Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet. Man unterscheidet zwei Technologien: TFT's aus Verbindungshalbleitern wie z.B. CdSe oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht, Oiese Technologie kann auch für voll farbtaugliche Bilddarstellungen erweitert werden, wobei ein Mosaik von roten, grünen und blauen Filtern derart angeordnet ist, daß je ein Filterelement einem schaltbaren Bildelement gegenüber liegt.

Die TFT-Anzeigen arbeiten üblicherweise als TN-Zellen mit gekreuzten Polarisatoren in Transmission und sind von hinten beleuchtet.

Der Begriff MFK-Anzeigen umfaßt hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen (z.B. Taschenfernseher) oder für hochinformative Displays in Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch nicht ausreichend hohen spezifischen Widerstand der Flüssigkristallmischungen [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84. Sept. 1984: A 210-288 Matrix LCD Controlled by Double Stage Diode Rings, p. 141 ff, Paris; STROMER. M., Proc. Eurodisplay 84. Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig, um akzeptable Standzeiten zu erhalten.

Es besteht somit immer noch ein großer Bedarf nach MFK-Anzeigen mit sehr hohem spezifischen Widerstand bei gleichzeitig großem Arbeitstemperaturbereich, kurzen Schaltzeiten und niedriger Schwellenspannung.

Der Erfindung liegt die Aufgabe zugrunde, MFK-Anzeigen bereitzustellen, die die oben angegebenen Nachteile nicht oder nur in geringerem Maße und gleichzeitig sehr hohe spezifische Widerstände aufweisen.

Es wurde nun gefunden, daß diese Aufgabe gelöst werden kann, wenn man in diesen Anzeigeelementen nematische Flüssigkristallmischungen verwendet, die auf den o.a. Komponenten A, B und C, B und C, bzw. B basieren.

Gegenstand der Erfindung ist somit eine MFK-Anzeige nach Anspruch 1.

Aus der EP-A 261 614 sind Fiüssigkristallzellen mit hochverdrillter Flüssigkristallschicht (z.B. STN-LCDs) basierend auf ähnlichen Gemischen bekannt, wobei die dort beschriebenen Gemische ausschließlich auf nitrilhaltigen, dielektrisch positiven Komponenten basieren.

Gegenstand der Erfindung sind auch entsprechende Flüssigkristallmischungen, deren Komponente B nitrilfreie Verbindungen enthält, insbesondere zur Verwendung in MFK-Anzeigen. Die Mischungen eignen sich jedoch auch für viele andere Anwendungen, wie z.B. TN, STN oder OMI.

Nematische Flüssigkristallmischungen, die anstelle der Verbindungen der Formel I analoge Verbindungen enthalten. worin einer der Reste $R^1$ und $R^2$ n-Alkyl und der andere n-Alkoxy bedeutet, sind bekannt und werden in vielfältigen Ausführungsformen kommerziell genutzt. Diese Flüssigkristallmischungen zeichnen sich jedoch durch zu niedrige Werte für den spezifischen Widerstand aus, wobei die Werte bei 20° oft zwischen $5.10^9$ und $1,1.10^{11}$ $\Omega$ cm oder niedriger liegen. Entsprechende MFK-Anzeigen haben für einige kommerzielle Anwendungen zu niedrige Werte für den spezifischen Widerstand.

Der spezifische Widerstand von Flüssigkristallmischungen ist im allgemeinen hoch, wenn die dielektrische Anisotropie klein ist, da die in Mischungen mit hohem $\Delta\varepsilon$ vorhandenen polaren Komponenten stabilisierend auf Ionen

wirken und somit eine hohe Leitfähigkeit bzw. einen niedrigen Widerstand bedingen. Es wurde nun überraschend gefunden, daß der spezifische Widerstand dann besonders hoch ist, wenn die mittlere Dielektrizitätskonstante $\bar{\varepsilon}$ [= $\frac{1}{3}$ ($2\,\varepsilon\perp + \varepsilon_{11}$)] klein ist und gleichzeitig die dielektrisch neutralen ($\Delta\varepsilon$ von -1,5 bis + 1.5) Komponenten der Flüssigkristallmischung keine funktionellen Gruppen wie zum Beispiel aromatisch gebundenes Alkoxy oder Ester-Funktionen enthalten.

Ganz besonders bevorzugt sind jedoch Flüssigkristallmischungen, deren Komponente B im wesentlichen aus nitrilfreien, fluorierten Verbindungen besteht. Vorzugsweise kommen die oben genannten bevorzugten Verbindungen der Formeln IIa bis IIf zum Einsatz.

'Im wesentlichen' soll bedeuten, daß der Anteil weiterer Verbindungen in der entsprechenden Komponente $\leqq$ 10 % ist.

Weiterhin bevorzugt sind Flüssigkristallmischungen deren Komponente B terminal chlorierte Verbindungen enthält. Derartige Verbindungen sind dem Fachmann bekannt und entsprechen vorzugsweise den Formeln IIa bis IIf mit X = Cl. In einer besonders bevorzugten Ausführungsform enthalten die Mischungen eine oder mehrere Verbindungen der Formel IIa bis IIf, worin $A^2$-X bzw.

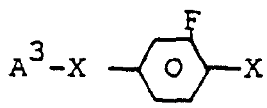

mit X = $CF_3$, -$OCF_3$, -$OCHF_2$ oder Cl bedeutet. Komponente B kann ferner noch 4-kernige Verbindungen enthalten, z.B. entsprechend den Formeln IIc bis IIf, worin einer der Ringe $A^1$ bis $A^3$ doppelt vorhanden ist.

Überraschenderweise wurde gefunden, daß Gruppen wie -$OCF_3$, -$OCHF_2$, -$OCF_2CF_2H$ oder -$OC_2F_5$ Ionen in den Displays bedeutend weniger stabilisieren als -$OCH_3$ bzw. -$OC_2H_5$.

Die erfindungsgemäßen Mischungen haben vorzugsweise einen spezifischen Widerstand bei 20° von $\geqq 10^{12}$ $\Omega$ . cm, insbesondere bevorzugt > $10^{13}$ $\Omega$ . cm. Das mittlere $\varepsilon$ ist vorzugsweise $\leqq$ 7, insbesondere bevorzugt $\leqq$ 5.

Die Werte der dielektrischen Anisotropie der einzelnen Verbindungen der Komponente B werden bei 20° bestimmt durch Extrapolation aus einer polaren Mischung (enthaltend 24 % p-trans-4-Propylcyclohexylbenzonitril, 36 % p-trans-4-Pentylcyclohexylbenzonitril. 25 % p-trans-4-Heptylcyclohexylbenzonitril und 15 % 4-Cyan-4'-(trans-4-pentylcyclohexyl)-biphenyl) falls die zu bestimmende Verbindung einen Dipol in der Längsachse des Moleküls enthält, bzw. aus einer neutralen Mischung (enthaltend 22 % trans-1-p-Ethylphenyl-4-propylcyclohexan, 20 % trans-1-p-Methoxyphenyl-1-propylcyclohexan, 15 % trans-1-p-Ethoxyphenyl-4-propylcyclohexan, 19 % 4-Ethyl-4-(trans-4-propylcyclohexyl)-biphenyl, 14 % 4-Ethyl-4'-(trans-4-pentylcyclohexyl)-biphenyl, 5 % 4,4'-Bis-(trans-4-propylcyclohexyl)-biphenyl und 5 % 4-(trans-4-Pentylcyclohexyl)-4'-(trans-4-propylcyclohexyl)-biphenyl) bei neutralen Verbindungen.

Die erfindungsgemäßen Flüssigkristallmischungen ermöglichen es bei niedrigen Viskositäten gleichzeitig einen hohen Wert für den spezifischen Widerstand zu erreichen, wodurch hervorragende MKF-Anzeigen erzielt werden können. Die erfindungsgemäßen MFK-Anzeigen arbeiten vorzugsweise im ersten Transmissionsminimum nach Gooch und Tarry [C.H. Gooch und H.A. Tarry, Electron. Lett. 10. 2-4, 1974; C.H. Gooch und H.A. Tarry. Appl. Phys., Vol. 8. 1575-1584, 1975], wobei hier neben besonders günstigen elektrooptischen Eigenschaften wie z.B. hohe Steilheit der Kennlinie und geringe Winkelabhängigkeit des Kontrastes (DE-PS 30 22 818) bei gleicher Schwellenspannung wie in einer analogen Anzeige im zweiten Minimum eine kleinere dielektrische Anisotropie ausreichend ist. Hierdurch lassen sich unter Verwendung der erfindungsgemäßen Mischungen im ersten Minimum deutlich höhere spezifische Widerstände verwirklichen.

Die Viskosität bei 20 °C ist vorzugsweise $\leqq$ 25 mPa.s. Der nematische Phasenbereich erstreckt sich mindestens von -20° bis + 70°.

Die einzelnen Verbindungen der Formeln II und deren Unterformeln, die in den erfindungsgemäßen MFK-Anzeigen verwendet werden können, sind entweder bekannt, oder sie können analog zu den bekannten Verbindungen hergestellt werden.

Komponente B besteht nicht überwiegend aus stark dielektrisch positiven Komponenten, sondern überwiegend aus schwach dielektrisch positiven Verbindungen wie zum Beispiel die im folgenden angegebenen fluorierten Verbindungen. Die erfindungsgemäßen Mischungen basieren in dieser besonderen Ausführungsform lediglich auf Komponente B. Besonders bevorzugt sind Flüssigkristallmischungen, deren Komponente B eine oder mehrere Verbindungen ausgewählt aus der Gruppe bestehend aus Verbindungen der Formeln IIa bis IIf enthält,

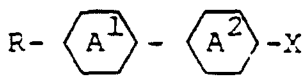

IIa

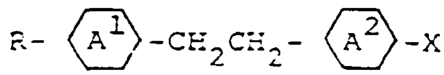

IIb

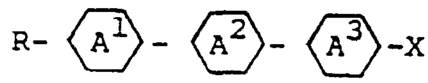

IIc

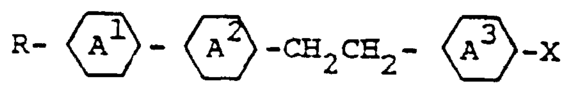

IId

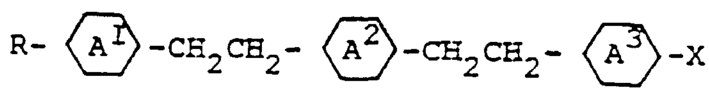

IIe

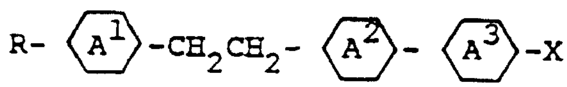

IIf

worin

| | |
|---|---|
| R | n-Alkyl oder n-Alkenyl mit bis zu 9 C-Atomen, |
| X | -NCS, F, Cl, $-CF_3$, $-CHF_2$, $-OCF_3$, $-OCHF_2$, $-OCF_2CF_2H$ oder $-OC_2F_5$, und |
| die Ringe $A^1$, $A^2$ und $A^3$ | jeweils unabhängig voneinander 1,4-Phenylen, 2- oder 3-Fluor-1,4-phenylen, 2,3-Difluor-1,4-phenylen, trans-1,4-Cyclohexylen oder 1,4-Cyclohexenylen bedeuten. |

In den Verbindungen der Teilformeln IIa bis IIf bedeutet X vorzugsweise F, Cl, $CF_3$, $-OCF_3$, $-OCHF_2$ oder $CHF_2$.

Die Ringe $A^1$, $A^2$ und $A^3$ bedeuten vorzugsweise jeweils unabhängig voneinander trans-1,4-Cyclohexylen oder 1,4-Phenylen. Einer der Ringe $A^1$, $A^2$ und $A^3$ ist in einer bevorzugten Ausführungsform 2- oder 3-Fluor-1,4-phenylen oder 2,3-Difluor-1,4-phenylen.

Es versteht sich von selbst, daß die erfindungsgemäßen Mischungen, die vorzugsweise im wesentlichen aus den für die Komponente B angegebenen bevorzugten Verbindungen bestehen, gegebenenfalls auch noch weitere, hier nicht explizit genannte Verbindungen enthalten können. In vielen Fällen resultieren jedoch dann ungünstigere Eigenschaften. Der Fachmann kann leicht feststellen, ob und ggf. in welchen Mengen weitere Verbindungen zum Einsatz kommen können.

Der Aufbau der erfindungsgemäßen MFK-Anzeige aus Polarisatoren, Elektrodengrundplatten und Elektroden mit Oberflächenbehandlung entspricht der für derartige Anzeigen üblichen Bauweise. Dabei ist der Begriff der üblichen Bauweise hier weit gefaßt und umfaßt auch alle Abwandlungen und Modifikationen der MFK-Anzeige, insbesondere auch Matrix-Anzeigeelemente auf Basis poly-Si TFT oder MIM.

Ein wesentlicner Unterschied der erfindungsgemäßen Anzeigen zu den bisher üblichen auf der Basis der verdrillten nematischen Zelle besteht jedoch in der Wahl der Flüssigkristallparameter der Flüssigkristallschicht.

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze

enthalten. Beispielsweise können 0-15 % pleochroitische Farbstoffe oder chirale Dotierstoffe zugesetzt werden.

Die einzelnen Verbindungen sind wie folgt codiert:

| | |
|---|---|
| PCH-301: | trans-1-p-Methoxyphenyl-4-propylcyclohexan |
| CCH-301: | trans,trans-4-Methoxy-4'-propylcyclohexylcyclohexan |
| CBC-33F: | 4,4'-Bis-(trans-4-propylcyclohexyl)-2-fluorbiphenyl |
| CBC-55F: | 4,4'-Bis-(trans-4-pentylcyclohexyl)-2-fluorbiphenyl |
| CBC-53F: | 4-(trans-4-Pentylcyclohexyl)-4'-(trans-4-propylcyclcohexyl)-2-fluorbiphenyl |
| CBC-33: | 4.4'-Bis-(trans-4-propylcyclohexyl)-biphenyl |
| CBC-55: | 4,4'-Bis-(trans-4-pentylcyclohexyl)-biphenyl |
| CBC-53: | 4-(trans-4-Pentylcyclohexyl)-4'-(trans-4-propylcyclohexyl)-biphenyl |
| ECCP-33: | 1-[trans-4-(trans-4-Propylcyclohexyl)-cyclohexyl]-2-(p-propylphenyl)-ethan |
| CCH-51F: | trans,trans-4-Fluormethyl-4'-pentylcyclohexylcyclohexan |
| CCH-31F: | trans,trans-4-Fluormethyl-4'-propylcyclohexylcyclohexan |
| PTP-102: | 4-Methyl-4'-ethoxy-tolan |
| PTP-201: | 4-Methoxy-4'-ethyl-tolan |
| CPTP-301: | 4-(trans-4-Propylcyclohexyl)-4'-methoxy-tolan |
| CPTP-302: | 4-(trans-4-Propylcyclohexyl)-4'-ethoxy-tolan |
| CPTP-303: | 4-(trans-4-Propylcyclohexyl)-4'-propoxy-tolan |
| PCH-5F: | trans-1-p-Fluorphenyl-4-pentylcyclohexan |
| PCH-6F: | trans-1-p-Fluorphenyl-4-hexylcyclohexan |
| PCH-7F: | trans-1-p-Fluorphenyl-4-heptylcyclohexan |
| EPCH-20CF$_3$: | 1-(trans-4-Ethylcyclohexyl)-2-(p-trifluormethoxyphenyl)-ethan |
| EPCH-30CF$_3$: | 1-(trans-4-Propylcyclohexyl)-2-(p-trifluormethoxyphenyl)-ethan |
| B EPCH-50CF$_3$: | 1-(trans-4-Pentylcyclohexyl)-2-(p-trifluormethoxyphenyl)-ethan |
| B EPCH-70CF$_3$: | 1-(trans-4-Heptylcyclohexyl)-2-(p-trifluormethoxyphenyl)-ethan |
| B PCH-30CF$_3$: | trans-1-p-Trifluormethoxyphenyl-4-propylcyclohexan |
| B PCH-50CF$_3$: | trans-1-p-Trifluormethoxyphenyl-4-phenylcyclohexan |
| B ECCP-30CF$_3$: | 1-[trans-4-(trans-4-Propylcylohexyl)-cyclohexyl]-2-(p-trifluormethoxyphenyl)-ethan |
| B ECCP-50CF$_3$: | 1-[trans-4-(trans-4-Pentylcyclohexyl)-cyclohexyl]-2-(p-trifluormethoxyphenyl)-ethan |
| B CCP-20CF$_3$: | P-[trans-4-(trans-4-Ethylcyclohexyl)-cyclohexyl]-trifluormethoxybenzol |
| B CCP-30CF$_3$: | p-[trans-4-(trans-4-Propylcyclohexyl)-cydohexyl]-trifluormethoxybenzol |
| B CCP-40CF$_3$: | P-[trans-4-(trans-4-Butylcyclohexyl)-cyclohexyl]-trifluormethoxybenzol |
| B CCP-50CF$_3$: | p-[trans-4-(trans-4-Pentylcyclohexyl)-cyclohexyl]-trifluormethoxybenzol |
| B BCH-30CF$_3$: | 4-Trifluormethoxy-4'-(trans-4-propylcyclohexyl)-biphenyl |
| B ECCP-3F.F: | 1-[trans-4-(trans-4-Propylcyclohexyl)-cyclohexyl]-2-(3,4-difluorphenyl)-ethan |
| B ECCP-5F.F: | 1-[trans-4-(trans-4-Pentylcyclohexyl)-cyclohexyl]-2-(3,4-difluorphenyl)-ethan |
| B CCP-3F.F: | 4-[trans-4-(trans-4-Propylcyclohexyl)-cyclohexyl]-1,2-difluorbenzol |
| B CCP-5F.F: | 4-[trans-4-(trans-4-Pentylcyclohexyl)-cyclohexyl]-1,2-difluorbenzol |
| B CCP-3F: | 4-[trans-4-(trans-4-Propylcyclohexyl)-cyclohexyl]-fluorbenzol |
| B ECCP-3F: | 1-[trans-4-(trans-4-Propylcyclohexyl)-cyctohexyl]-2-(p-fluorphenyl)-ethan |
| B ECCP-5F: | 1-[trans-4-(trans-4-Pentylcyclohexyl)-cyclohexyl]-2-(p-fluorphenyl)-ethan |
| B CP-3F: | trans-4-(trans-4-Propylcyclohexyl)-cyclohexancarbonsäure-(p-fluorphenylester) |
| B CP-5F: | trans-4-(trans-4-Propylcyclohexyl)-cyclohexancarbonsäure-(p-fluorphenylester) |
| B PYP-5F: | 2-p-Fluorphenyl-5-pentylpyrimidin |
| B PYP-6F: | 2-p-Fluorphenyl-5-hexylpyrimidin |
| B PYP-7F: | 2-p-Fluorphenyl-5-heptylpyrimidin |
| B PYP-30CF$_3$: | 2-p-Trifluormethoxyphenyl-5-propylpyrimidin |
| B PYP-50CF$_3$: | 2-p-Trifluormethoxyphenyl-5-pentylpyrimidin |
| B PYP-70CF$_3$: | 2-p-Trifluormethoxyphenyl-5-heptylpyrimidin |
| B PCH-3: | p-trans-4-Propylcyclohexyl-benzonitril |
| B PCH-4: | p-trans-4-Butylcyclohexyl-benzonitril |
| B PCH-5: | p-trans-4-Pentylcyclohexyl-benzonitril |
| B ECCP-3: | 1-[trans-4-(trans-4-Propylcyclohexyl)-cyclohexyl]-2-(p-cyanphenyl)-ethan |
| B ECCP-3CF$_3$: | 1-[trans-4-(trans-4-Propylcyclohexyl)-cyclohexyl]-2-(p-trifluormethylphenyl)-ethan |
| B ECCP-5CF$_3$: | 1-[trans-4-(trans-4-Pentylcyclohexyl)-cyclohexyl]-2-(p-trifluormethylphenyl)-ethan |
| B PYP-5N.F: | 2-(3-Fluor-4-cyanphenyl)-5-pentylpyrimidin |
| B PYP-7N.F: | 2-(3-Fluor-4-cyanphenyl)-5-heptylpyrimidin |

| | |
|---|---|
| B PCH-30CF$_2$: | trans-1-p-Difluormethoxyphenyl-4-propylcyclohexan |
| B PCH-50CF$_2$: | trans-1-p-Difluormethoxyphenyl-4-phenylcyclohexan |
| B PCH-3 0CF$_2$ : | trans-1-p-Difluormethoxyphenyl-4-propylcyclohexan |
| A PCH-53: | trans-1-p-Propylphenyl-4-pentylcyclohexan |

Die erfindungsgemäßen Flüssigkristallmischungen können neben der Komponente B noch weitere Zusätze wie beispielsweise chirale Dotierstoffe, isotrope Zusätze zur Modifizierung verschiedener Parameter, pleochroitische Farbstoffe, etc. enthalten.

**Patentansprüche**

**1.** Matrix-Flüssigkristallanzeige mit

- zwei planparallelen Trägerplatten, die mit einer Umrandung eine Zelle bilden,
- integrierten nicht-linearen Elementen zur Schaltung einzelner Bildpunkte auf den Trägerplatten und
- einer in der Zelle befindlichen nematischen Flüssigkristallmischung mit positiver dielektrischer Anisotropie und hohem spezifischem Widerstand,

dadurch gekennzeichnet, daß die Flüssigkristallmischung lediglich auf einer flüssigkristallinen Komponente B basiert

- bestehend aus einer oder mehreren Verbindungen mit einer dielektrischen Anisotropie von über +1,5,
- die eine oder mehrere Verbindungen ausgewählt aus der Gruppe bestehend aus Verbindungen der Formeln IIa bis IIf enthält,

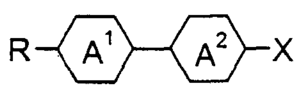

IIa

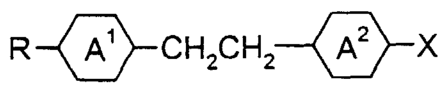

IIb

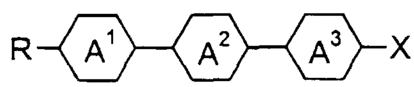

IIc

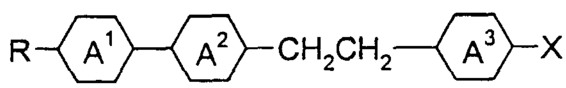

IId

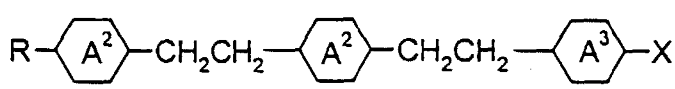

IIe

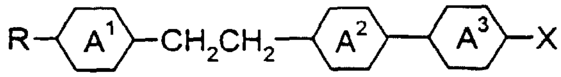

IIf

worin

R n-Alkyl oder n-Alkenyl mit bis zu 9 C-Atomen,

X NCS, F, $CF_3$, Cl, $-CHF_2$, $-OCF_3$, $-OCHF_2$, $-OCF_2CF_2H$ oder $-OC_2F_5$,

und

die Ringe $A^1$, $A^2$ und $A^3$ jeweils unabhängig voneinander 1,4-Phenylen, 2- oder 3-Fluor-1,4-phenylen, 2,3-difluor-1,4-phenylen, trans-1,4-Cyclohexylen oder 1,4-Cyclohexenylen

bedeuten,

- die im wesentlichen aus nitrilfreien, fluorierten Verbindungen besteht, wobei im wesentlichen bedeutet, daß der Anteil weiterer Verbindungen in der Komponente ≤ 10 % ist,

und die nematische Flüssigkristallmischung keine Verbindungen mit terminalem Nitril enthält, einen nematischen Phasenbereich von mindestens 60 °, der sich mindestens von -20 °C bis +70 °C erstreckt, eine Viskosität bei 20 °C von maximal 30 mPa.s und eine mittlere Dielektrizitätskonstante ≤ 8 aufweist mit der Maßgabe, daß Flüssigkristallmischungen enthaltend 2-p-Fluorphenyl-5-ethylpyrimidin ausgeschlossen sind.

**2.** Anzeige nach Anspruch 1, dadurch gekennzeichnet, daß

X F, Cl, $CF_3$, $-OCF_3$, $-OCHF_2$ oder $CHF_2$ bedeutet.

**3.** Flüssigkristallmischung der in Anspruch 1 definierten Zusammensetzung.

**4.** Flüssigkristallmischung nach Anspruch 3, dadurch gekennzeichnet, daß X in den Teilformeln IIa bis IIf F, Cl, $CF_3$, $OCF_3$, $OCHF_2$ oder $CHF_2$ bedeutet.

**Claims**

**1.** Matrix liquid-crystal display containing

- two plane parallel support plates which together with a frame form a cell,
- integrated non-linear elements for switching individual picture elements on the support plates and
- a nematic liquid-crystal mixture which is present in the cell and has a positive dielectric anisotropy and high resistivity,

characterized in that the liquid-crystal mixture is based only on a liquid-crystalline component B

- consisting of one or more compounds having a dielectric anisotropy of more than +1.5,
- which contains one or more compounds selected from the group consisting of compounds of the formulae IIa to IIf

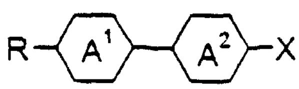

IIa

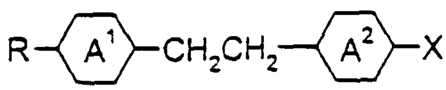
IIb

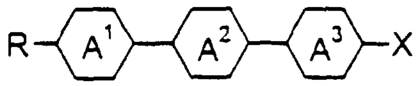
IIc

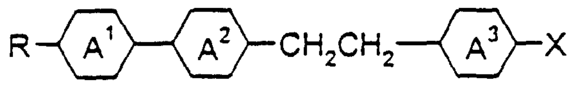
IId

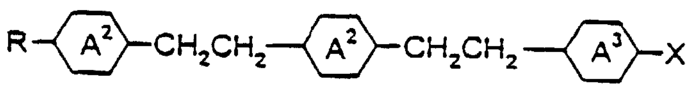
IIe

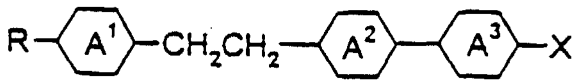
IIf

in which

R is n-alkyl or n-alkenyl of up to 9 carbon atoms,
X is NCS, F, $CF_3$, Cl, $-CHF_2$, $-OCF_3$, $-OCHF_2$, $-OCF_2CF_2H$ or $-OC_2F_5$,

and

the rings $A^1$, $A^2$ and $A^3$ are each, independently of one another, 1,4-phenylene, 2- or 3-fluoro-1,4-phenylene, 2, 3-difluoro-1,4-phenylene, trans-1,4-cyclohexylene or 1,4-cyclohexenylene,

- which essentially consists of nitrile-free, fluorinated compounds, where essentially means that the amount of further compounds in the component is ≤ 10%,
  and the nematic liquid-crystal mixture contains no compounds containing terminal nitrile,
  has a nematic phase range of at least 60°, which extends at least from -20°C to +70°C, a viscosity at 20°C of at most 30 mPa.s and an average dielectric constant of ≤ 8 with the proviso that liquid-crystal mixtures comprising 2-p-fluorophenyl-5-ethylpyrimidine are excluded.

**2.** Display according to Claim 1, characterized in that

X is F, Cl, $CF_3$, $-OCF_3$, $-OCHF_2$ or $CHF_2$.

**3.** Liquid-crystal mixture of the composition defined in Claim 1.

**4.** Liquid-crystal mixture according to Claim 3, characterized in that X in the subformulae IIa to IIf is F, Cl, $CF_3$, $OCF_3$, $OCHF_2$ or $CHF_2$.

**Revendications**

**1.** Afficheur matriciel à cristaux liquides comportant :

- deux plaques de support à faces parallèles qui, avec un bord, forment une cellule,
- des éléments non linéaires pour la commutation de points d'image individuels sur les plaques de support, et
- une composition de cristaux liquides nématiques se trouvant dans la cellule, à anisotropie diélectrique positive et haute résistance spécifique,

caractérisé en ce que la composition de cristaux liquides est uniquement à base du composant B de type cristal liquide

- constitué d'un ou plusieurs composés ayant une anisotropie diélectrique supérieure à + 1,5,
- contenant un ou plusieurs composés choisis dans le groupe constitué des composés de formules IIa à IIf

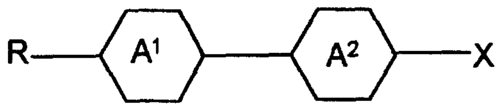

IIa

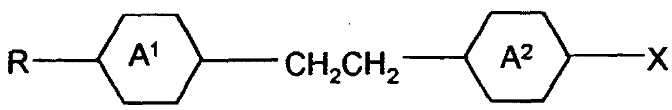

IIb

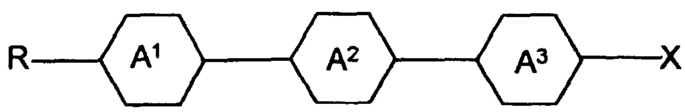

IIc

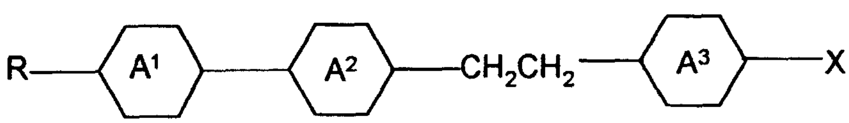

IId

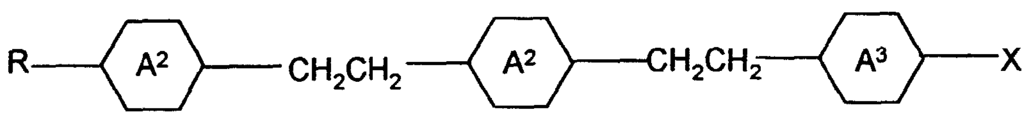

IIe

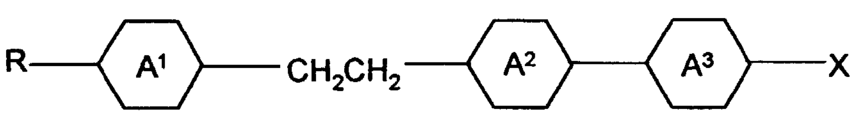

IIf

où

R représente un n-alkyle ou un n-alcényle comportant jusqu'à 9 atomes de C,

X NCS, F, $CF_3$, Cl, $-CHF_2$, $-OCF_3$, $-OCHF_2$, $-OCF_2CF_2H$ ou $-OC_2F_5$,

et

les cycles $A^1$, $A^2$ et $A^3$ représentent, indépendamment les uns des autres, le 1,4-phénylène, le 2- ou le 3-fluoro-1,4-phénylène, le 2,3-di-fluoro-1,4-phénylène, le trans-1,4-cyclohexylène ou le 1,4-cyclohexénylène,

- constitué essentiellement de composés fluorés exempts de groupes nitriles, essentiellement signifiant que la proportion des autres composés dans le composant est ≤ 10 %,

et caractérisé en ce que la composition de cristaux liquides nématiques ne contient pas de composés comportant un groupe nitrile terminal et présente une plage de phase nématique d'au moins 60°C, s'étendant entre au moins -20°C et +70°C, une viscosité à 20°C d'au maximum 30 mPa.s et une constante diélectrique moyenne ≤ 8, sous réserve que soient exclues les compositions de cristaux liquides contenant la 2-p-fluorophényl-5-éthylpyrimidine.

**2.** Afficheur selon la revendication 1, caractérisé en ce que X représente F, Cl, $CF_3$, $-OCF_3$, $-OCHF_2$ ou $CHF_2$.

**3.** Composition de cristaux liquides ayant la composition définie dans la revendication 1.

**4.** Composition de cristaux liquides selon la revendication 3, caractérisée en ce que, dans les sous-formules IIa à IIf, X représente F, Cl, $CF_3$, $OCF_3$, $OCHF_2$ ou $CHF_2$.